(19) Europäisches Patentamt / European Patent Office / Office européen des brevets

(11) **EP 2 519 861 B1**

(12) **EUROPÄISCHE PATENTSCHRIFT**

(45) Veröffentlichungstag und Bekanntmachung des Hinweises auf die Patenterteilung:
**20.05.2015   Patentblatt 2015/21**

(21) Anmeldenummer: **11706782.7**

(22) Anmeldetag: **15.02.2011**

(51) Int Cl.:
*G05B 13/02* *(2006.01)*

(86) Internationale Anmeldenummer:
**PCT/EP2011/052162**

(87) Internationale Veröffentlichungsnummer:
**WO 2011/110404 (15.09.2011 Gazette 2011/37)**

(54) **VERFAHREN ZUR RECHNERGESTÜTZTEN STEUERUNG UND/ODER REGELUNG EINES TECHNISCHEN SYSTEMS**

METHOD FOR THE COMPUTER-AIDED CONTROL OF A TECHNICAL SYSTEM

PROCÉDÉ DE COMMANDE ET/OU DE RÉGULATION ASSISTÉE PAR ORDINATEUR D'UN SYSTÈME TECHNIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.03.2010   DE 102010011221**

(43) Veröffentlichungstag der Anmeldung:
**07.11.2012   Patentblatt 2012/45**

(73) Patentinhaber: **Siemens Aktiengesellschaft 80333 München (DE)**

(72) Erfinder:
- **DÜLL, Siegmund 81549 München (DE)**
- **STERZING, Volkmar 85579 Neubiberg (DE)**
- **UDLUFT, Steffen 82223 Eichenau (DE)**

(56) Entgegenhaltungen:
**DE-A1-102007 001 025     DE-A1-102007 001 026**

EP 2 519 861 B1

**Beschreibung**

Die Erfindung betrifft ein Verfahren zur rechnergestützten Steuerung und/oder Regelung eines technischen Systems sowie ein entsprechendes Computerprogrammprodukt.

Heutzutage weisen technische Systeme in der Regel eine hohe Komplexität auf, d.h. sie werden durch Zustände mit einer Vielzahl von Zustandsvariablen beschrieben. Ferner können an dem technischen System viele unterschiedliche Aktionen basierend auf entsprechenden Aktionsvariablen durchgeführt werden. Die Zustandsvariablen sind hierbei insbesondere messbare Zustandsgrößen des technischen Systems, wie z.B. physikalische Größen, wie Druck, Temperatur, Leistung und dergleichen. Die Aktionsvariablen stellen insbesondere einstellbare Größen des technischen Systems dar, wie z.B. die Zufuhr von Brennstoff zu Brennkammern in Gasturbinen.

Bei der Steuerung von komplexen technischen Systemen werden oftmals rechnergestützte Verfahren verwendet, welche das dynamische zeitliche Verhalten des technischen Systems unter Berücksichtigung vorbestimmter Kriterien optimieren. Beispiele solcher Verfahren sind Lernverfahren, wie hinlänglich aus dem Stand der Technik bekannte bestärkende Lernverfahren (Reinforcement Learning). Eine Variante eines solchen Lernverfahrens ist in der Druckschrift DE 10 2007 001 025 B4 beschrieben. Die bekannten Verfahren optimieren das dynamische Verhalten eines technischen Systems durch Bestimmung von geeigneten, am technischen System durchzuführenden Aktionen, wobei diese Aktionen Veränderungen von bestimmten Stellgrößen im technischen System, wie z.B. Veränderung von Ventilstellungen, Erhöhung von Drucken und dergleichen, umfassen. Jede Aktion wird hierbei in geeigneter Weise durch ein Bewertungssignal in der Form einer Belohnung bzw. Bestrafung, beispielsweise unter Einbeziehung einer Kostenfunktion, bewertet, wodurch ein optimales dynamisches Verhalten des technischen Systems erzielt werden kann.

Bei den oben beschriebenen Standardverfahren zur Steuerung bzw. Optimierung des dynamischen Verhaltens von technischen Systemen besteht das Problem, dass solche Verfahren nur in begrenztem Umfang für technische Systeme mit einer Vielzahl von Zustandsvariablen und Aktionsvariablen (d.h. in einem hoch dimensionalen Zustandsraum aus Zuständen und Aktionen) eingesetzt werden können.

Zur Reduzierung der Zustandsvariablen ist es aus der Druckschrift DE 10 2007 001 026 B4 bekannt, ein technisches System basierend auf einem rekurrenten neuronalen Netz zu modellieren, bei dem die Anzahl der Zustände in der rekurrenten versteckten Schicht geringer ist als in der Eingangsschicht bzw. Ausgangsschicht. Die versteckten Zustände werden dabei als Eingaben für entsprechende Lern- bzw. Optimierungsverfahren zur Regelung und/oder Steuerung des technischen Systems verwendet. Das Verfahren dieser Druckschrift vermindert zwar die Dimension des Zustandsraums der versteckten Schicht, berücksichtigt jedoch nicht, welcher Informationsgehalt zur Modellierung des dynamischen Verhaltens des technischen Systems tatsächlich erforderlich ist. Insbesondere werden bei der dort modellierten Dynamik in der Ausgangsschicht immer alle Zustandsvariablen aus der Eingangsschicht prognostiziert, ohne zu analysieren, welche Zustandsvariablen tatsächlich für die Modellierung des dynamischen Verhaltens des technischen Systems erforderlich sind. Demzufolge arbeitet das Verfahren dieser Druckschrift zwar auf einem verkleinerten Zustandsraum, stellt jedoch nicht sicher, dass in dem verkleinerten Zustandsraum die Dynamik des technischen Systems richtig modelliert wird. Dies führt zu einem größeren Fehler bei der Modellierung bzw. bei der rechnergestützten Steuerung und/oder Regelung des technischen Systems.

Aufgabe der Erfindung ist es, ein Verfahren zur Steuerung und/oder Regelung eines technischen Systems zu schaffen, welches mit hoher Recheneffizienz und Genauigkeit das dynamische Verhalten des technischen Systems modelliert.

Diese Aufgabe wird durch das Verfahren gemäß Patentanspruch 1 bzw. das Computerprogrammprodukt gemäß Patentanspruch 15 gelöst. Weiterbildungen der Erfindung sind in den abhängigen Ansprüchen definiert.

Das erfindungsgemäße Verfahren dient zur rechnergestützten Steuerung bzw. Regelung eines technischen Systems, welches für mehrere Zeitpunkte jeweils durch einen Zustand mit einer Anzahl von Zustandsvariablen und eine am technischen System durchgeführte Aktion mit einer Anzahl von Aktionsvariablen sowie ein Bewertungssignal für den Zustand und die Aktion charakterisiert wird.

In dem erfindungsgemäßen Verfahren wird das dynamische Verhalten des technischen Systems mit einem rekurrenten neuronalen Netz umfassend eine Eingangsschicht, eine rekurrente versteckte Schicht und eine Ausgangsschicht basierend auf Trainingsdaten aus bekannten Zuständen, Aktionen und Bewertungssignalen modelliert, wobei:

i) die Eingangsschicht durch einen ersten Zustandsraum mit einer ersten Dimension gebildet wird, der die Zustände des technischen Systems und die am technischen System durchgeführten Aktionen umfasst;

ii) die rekurrente versteckte Schicht durch einen zweiten Zustandsraum mit einer zweiten Dimension gebildet wird, der versteckte Zustände mit einer Anzahl von versteckten Zustandsvariablen umfasst;

iii) die Ausgangsschicht durch einen dritten Zustandsraum mit einer dritten Dimension gebildet wird, welcher derart festgelegt wird, dass seine Zustände die Bewertungssignale oder ausschließlich solche Zustands- und/oder Aktionsvariablen repräsentieren, welche die Bewertungssignale beeinflussen.

Die Dimension des ersten Zustandsraums entspricht somit der Anzahl an Zustands- und Aktionsvariablen in der Eingangsschicht. Die Dimension des zweiten Zustandsraums ist durch die Anzahl an versteckten Zustandsvariablen gegeben. Die Dimension des dritten Zustandsraums entspricht der Dimension des Bewertungssignals (in der Regel eindimensional) bzw. der Anzahl an Zustands- und/oder Aktionsvariablen, welche dieses Signal beeinflussen.

Nach der Modellierung des dynamischen Verhaltens des technischen Systems wird im erfindungsgemäßen Verfahren auf den versteckten Zuständen in dem zweiten Zustandsraum ein Lern- und/oder Optimierungsverfahren zur Steuerung und/oder Regelung des technischen Systems durch Ausführen von Aktionen am technischen System durchgeführt.

Das erfindungsgemäße Verfahren zeichnet sich dadurch aus, dass ein rekurrentes neuronales Netz verwendet wird, dessen Ausgangsschicht durch das Bewertungssignal bzw. ausschließlich das Bewertungssignal bestimmende Größen beeinflusst wird. Auf diese Weise wird sichergestellt, dass ausschließlich solche Größen im rekurrenten neuronalen Netz modelliert werden, welche tatsächlich die Dynamik des technischen Systems beeinflussen. Hierdurch kann selbst bei einer Reduzierung der zweiten Dimension des zweiten Zustandsraums das dynamische Verhalten des technischen Systems sehr gut modelliert werden. Es wird somit eine präzise und recheneffiziente Regelung und/oder Steuerung des technischen Systems basierend auf den versteckten Zuständen in der versteckten Schicht ermöglicht.

Vorzugsweise erfolgt in dem erfindungsgemäßen Verfahren die Modellierung des dynamischen Verhaltens des technischen Systems derart, dass das rekurrente neuronale Netz basierend auf den Trainingsdaten derart trainiert wird, dass die Zustände der Ausgangsschicht für einen oder mehrere zukünftige Zeitpunkte aus einem oder mehreren vergangenen Zeitpunkten prognostiziert werden. Dies wird z.B. dadurch erreicht, dass der Fehler zwischen den prognostizierten Zuständen und den Zuständen gemäß den Trainingsdaten minimiert wird. Vorzugsweise werden bei der Prognose der Erwartungswert der Zustände der Ausgangsschicht und besonders bevorzugt der Erwartungswert des Bewertungssignals prognostiziert.

Um eine geeignete Prognose mit dem rekurrenten neuronalen Netz der Erfindung zu erreichen, sind in einer bevorzugten Variante die versteckten Zustände in der versteckten Schicht über Gewichte derart verbunden, dass sich die Gewichte für zukünftige Zeitpunkte von den Gewichten für vergangene Zeitpunkte unterscheiden. Das heißt, es wird in dem rekurrenten neuronalen Netz zugelassen, dass die Gewichte für zukünftige Zeitpunkte anders gewählt werden als für vergangene Zeitpunkte. Die Gewichte können dabei Matrizen sein, jedoch gegebenenfalls auch durch neuronale Netze in der Form von Multi-Layer-Perzeptronen repräsentiert sein. Auch die Gewichte zwischen den einzelnen Schichten im neuronalen Netz können durch Matrizen oder gegebenenfalls auch durch Multi-Layer-Perzeptronen realisiert werden.

Das erfindungsgemäße Verfahren weist insbesondere den Vorteil auf, dass auch technische Systeme mit nichtlinearer Dynamik gesteuert bzw. geregelt werden können. Ferner kann in dem erfindungsgemäßen Verfahren ein rekurrentes neuronales Netz mit einer nicht-linearen Aktivierungsfunktion eingesetzt werden.

Als Lern- bzw. Optimierungsverfahren, welche auf die versteckten Zustände der rekurrenten versteckten Schicht des rekurrenten neuronalen Netzes angewendet werden, können beliebige, aus dem Stand der Technik bekannte Verfahren eingesetzt werden. Beispielsweise kann das in der oben erwähnten Druckschrift DE 10 2007 001 025 B4 beschriebene Verfahren verwendet werden. Allgemein wird für das Lern- bzw. Optimierungsverfahren ein maschinelles Lernverfahren und insbesondere ein bestärkendes Lernverfahren verwendet. Beispiele solcher Lernverfahren sind dynamische Programmierung und/oder Prioritized Sweeping und/oder Q-Learning.

Um die zweite Dimension des zweiten Zustandsraums in dem rekurrenten neuronalen Netz geeignet einzustellen, wird in einer weiteren bevorzugten Variante des erfindungsgemäßen Verfahrens die zweite Dimension des zweiten Zustandsraums variiert, bis eine zweite Dimension gefunden ist, welche ein oder mehrere vorgegebene Kriterien erfüllt. Diese aufgefundene zweite Dimension wird dann für den zweiten Zustandsraum der rekurrenten versteckten Schicht verwendet. In einer bevorzugten Variante wird dabei die zweite Dimension des zweiten Zustandsraums schrittweise solange vermindert, wie die Abweichung zwischen den mit dem rekurrenten neuronalen Netz bestimmten Zuständen der Ausgangsschicht und den bekannten Zuständen gemäß den Trainingsdaten kleiner als ein vorbestimmter Schwellwert ist. Hierdurch kann in geeigneter Weise ein zweiter Zustandsraum mit reduzierter Dimension gefunden werden, der eine gute Modellierung des dynamischen Verhaltens des technischen Systems ermöglicht.

In einer weiteren Variante des erfindungsgemäßen Verfahrens wird das Bewertungssignal durch eine Bewertungsfunktion repräsentiert, welche von einem Teil der Zustands- und/oder Aktionsvariablen abhängt. Dieser Teil der Zustands- und/oder Aktionsvariablen kann somit gegebenenfalls die Zustände der Ausgangsschicht bilden.

In einer besonders bevorzugten Ausführungsform des erfindungsgemäßen Verfahrens wird das im rekurrenten neuronalen Netz verwendete Bewertungssignal auch in dem daran anschließenden Lern- und/oder Optimierungsverfahren eingesetzt, um die Aktionen im Hinblick auf ein optimales Bewertungssignal auszuführen. Optimal bedeutet dabei, dass die Aktion zu einer hohen Belohnung bzw. zu geringen Kosten gemäß dem Bewertungssignal führt.

Das erfindungsgemäße Verfahren kann in beliebigen technischen Systemen zu deren Steuerung bzw. Regelung eingesetzt werden. In einer besonders bevorzugten Variante wird das erfindungsgemäße Verfahren zur Steuerung einer Turbine, insbesondere einer Gasturbine oder Windturbine, verwendet. Für eine Gasturbine ist das Bewertungssignal beispielsweise zumindest durch den Wirkungsgrad und/oder die Schadstoffemission der Turbine und/oder die mechanischen Belastungen der Brennkammern der Turbine bestimmt. Ziel der Optimierung ist dabei ein hoher Wirkungsgrad bzw. eine geringe Schadstoffemission bzw. eine geringe mechanische Belastung der Brennkammern. Bei der Verwendung des Verfahrens zur Regelung bzw. Steuerung einer Windturbine kann das Bewertungssignal beispielsweise zumindest die (dynamischen) Kraftbelastung auf ein oder mehrere Rotorblätter der Windturbine und die erzeugte elektrische Leistung darstellen.

Neben dem oben beschriebenen Verfahren umfasst die Erfindung ferner ein Computerprogrammprodukt mit einem auf einem maschinenlesbaren Träger gespeicherten Programmcode zur Durchführung des erfindungsgemäßen Verfahrens, wenn das Programm auf einem Rechner läuft.

Ausführungsbeispiele der Erfindung werden nachfolgend anhand der beigefügten Figuren detailliert beschrieben.

Es zeigen:

Fig. 1 ein schematisches Diagramm, welches allgemein die Modellierung des dynamischen Verhaltens eines technischen Systems verdeutlicht;

Fig. 2 eine schematische Darstellung eines rekurrenten neuronalen Netzes, welches in einer Ausführungsform der Erfindung zur Berechnung von versteckten Zuständen verwendet wird;

Fig. 3 eine schematische Darstellung eines technischen Systems in der Form einer Windturbine, wobei basierend auf Daten dieses Systems eine Ausführungsform des erfindungsgemäßen Verfahrens getestet wurde;

Fig. 4 ein Diagramm, welches die Ergebnisse einer Ausführungsform des erfindungsgemäßen Verfahrens basierend auf Daten der Windturbine gemäß Fig. 3 verdeutlicht; und

Fig. 5 ein Diagramm, welches Ergebnisse einer Ausführungsform des erfindungsgemäßen Verfahrens basierend auf dem an sich bekannten Cart-Pole-Problem wiedergibt.

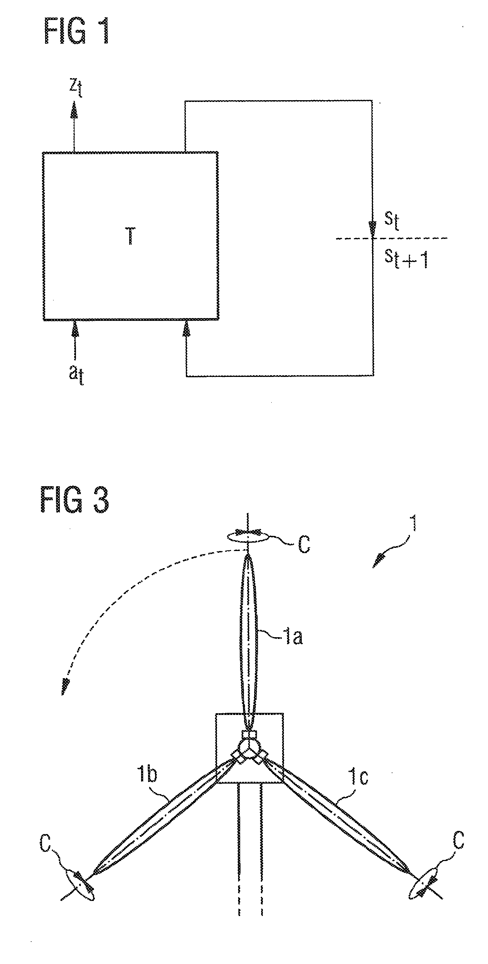

Fig. 1 zeigt schematisch die Dynamik eines in der Erfindung betrachteten technischen Systems, welches durch eine Box mit Bezugszeichen T angedeutet ist. Das technische System wird dabei zu einem jeweiligen Zeitpunkt t durch einen beobachtbaren Zustand bzw. eine Oberservable $z_t$ und eine am technischen System durchgeführte Aktion $a_t$ beschrieben. Dabei enthält das System interne bzw. versteckte Zustände $s_t$, welche nicht beobachtbar sind. Der versteckte Zustand $s_t$ ändert sich dabei durch eine Aktion $a_t$ und geht in den Zustand $s_{t+1}$ über. Der Zustand $s_{t+1}$ hängt von der Aktion $a_t$ sowie dem vorhergehenden Zustand $s_t$ ab. Das technische System T ist ferner durch ein geeignetes Bewertungssignal (nicht aus Fig. 1 ersichtlich) spezifiziert, welches definiert, inwieweit die in einem Zustand des technischen Systems durchgeführte Aktion im Hinblick auf einen optimalen Betrieb des technischen Systems als gut einzustufen ist. Beispiele solcher Bewertungssignale sind die Schadstoffemission des technischen Systems oder die mechanische Belastung und Wechselbelastung des technischen Systems im Betrieb, wobei die Zielsetzung einer Steuerung bzw. Regelung des technischen Systems eine geringe Emission bzw. eine geringe mechanische Belastung ist.

Im erfindungsgemäßen Verfahren wird unter Berücksichtigung des Bewertungssignals zunächst eine geeignete Modellierung des dynamischen Verhaltens des technischen Systems basierend auf Trainingsdaten umfassend Zustände und Aktionen zu einer Vielzahl von Zeitpunkten durchgeführt. Im Folgenden wird als Bewertungssignal ein Belohnungssignal betrachtet, welches häufig auch als Reward bezeichnet wird und welches im Betrieb des technischen Systems möglichst groß sein sollte. Es wird davon ausgegangen, dass die Beschreibung des technischen Systems basierend auf den Zuständen und Aktionen einen sog. Markov-Entscheidungsprozess darstellt, wobei für diesen Entscheidungsprozess nur das Belohnungssignal eine relevante Information darstellt. Markov-Entscheidungsprozesse sind aus dem Stand der Technik bekannt und z.B. in der Druckschrift DE 10 2007 001 025 B4 näher definiert.

Mit dem erfindungsgemäßen Verfahren wird die für den durch die Belohnung definierten Markov-Entscheidungsprozess relevante Information in den versteckten Zustand $s_t$ codiert, wobei - im Gegensatz zu bekannten Verfahren - für den Markov-Entscheidungsprozess nicht relevante Informationen unberücksichtigt bleiben. Um dies zu erreichen, ist das rekurrente neuronale Netz, welches zur Modellierung des dynamischen Verhaltens des technischen Systems verwendet wird, derart ausgestaltet, dass es in der Ausgangsschicht das Belohnungssignal bzw. ausschließlich das Belohnungssignal beeinflussende Größen enthält, wie weiter unten noch näher beschrieben wird.

Wie oben erwähnt, wird zunächst eine Modellierung des dynamischen Verhaltens des technischen Systems durchgeführt, wodurch geeignete versteckte Zustände des technischen Systems erhalten werden. Auf diese Zustände können anschließend geeignete Lern- bzw. Optimierungsverfahren zur Steuerung bzw. Regelung des technischen Systems angewendet werden. Diese Verfahren liefern dann im Realbetrieb des technischen Systems die jeweils optimale Aktion in einem bestimmten Zustand des technischen Systems, wobei die Optimalität durch das oben erwähnte Belohnungssignal festgelegt ist.

Zum besseren Verständnis wird zunächst erläutert, wie in herkömmlicher Weise mittels eines rekurrenten neuronalen Netzes das dynamische Verhalten eines technischen Systems modelliert werden kann und hierdurch entsprechende versteckte Zustände erhalten werden können. Allgemein kann die Dynamik eines technischen Systems für aufeinander folgende Zeitpunkte $\left(t = 1,...,T,\ T \in \aleph\right)$ wie folgt beschrieben werden:

$$s_{t+1} = f\left(s_t, z_t, a_t\right) \qquad (1)$$

$$z_t = g\left(s_t\right) \qquad (2)$$

In herkömmlichen Verfahren wird ein dynamisch konsistentes rekurrentes neuronales Netz verwendet, um den Markov-Zustandsraum zu beschreiben. Das Ziel dieses Netzes ist dabei eine Minimierung des Fehlers der prognostizierten Zustände $z_t$ des technischen Systems gegenüber den gemessenen Zuständen $z_t^d$. Mathematisch kann dies wie folgt beschrieben werden:

$$\sum_{t=1}^{T} \left(z_t - z_t^d\right)^2 \to \min_{f,g} \qquad (3)$$

Es wird somit nach einer geeigneten Parametrisierung der Funktionen f und g gesucht, so dass die Abweichung zwischen prognostizierten und tatsächlichen beobachteten Zuständen minimal ist. In den Dokumenten DE 10 2007 001 025 B4 und DE 10 2007 001 026 B4 sind solche Modellierungen des technischen Systems basierend auf rekurrenten neuronalen Netzen gezeigt. Dabei enthalten die Ausgangsschichten in diesen Netzen, wie bereits oben erwähnt, die zu prognostizierenden Observablen.

Die Observablen werden in der Regel durch einen Vektor $z_t$ aus einer Vielzahl von Zustandsvariablen beschrieben. Analog werden die Aktionen durch einen Vektor $a_t$ mit einer Vielzahl von Aktionsvariablen beschrieben. Es wurde nunmehr erkannt, dass in vielen Fällen nicht alle Einträge der Vektoren $z_t$ bzw. $a_t$ berücksichtigt werden müssen, um die Dynamik des technischen Systems zu modellieren. Dies wird durch das nachfolgend beschriebene Markov-Entscheidungsprozess-Extraktions-Netzwerk erreicht, welches im Folgenden auch als MPEN-Netz bezeichnet wird. Es werden dabei gegenüber einem herkömmlichen, dynamisch konsistenten rekurrenten neuronalen Netz einige Änderungen vorgenommen.

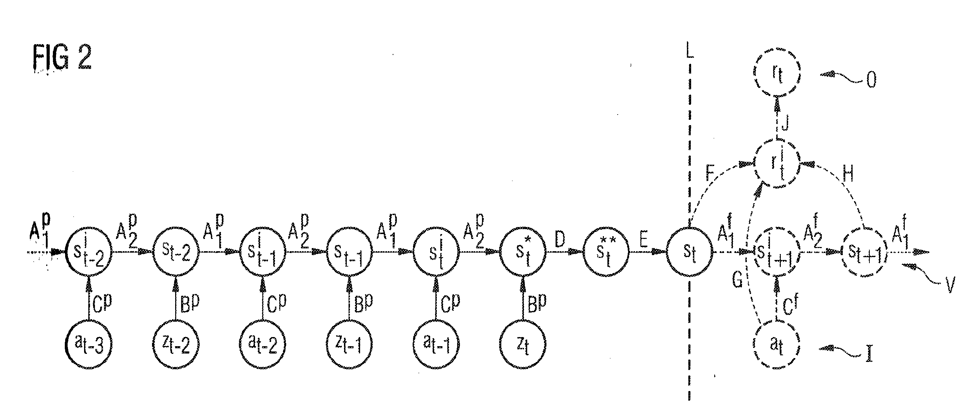

Eine spezielle Ausführungsform eines MPEN-Netzes ist in Fig. 2 gezeigt. Die Eingangsschicht des MPEN-Netzes dieser Figur ist dabei mit I, die versteckte Schicht mit V und die Ausgangsschicht mit O bezeichnet. Der aktuelle Zeitpunkt ist der Zeitpunkt t. Man erkennt, dass die Eingangsschicht die Zustände $z_{t-2}$, $z_{t-1}$, $z_t$ sowie die entsprechenden Aktionen $a_{t-3}$, $a_{t-2}$, $a_{t-1}$ umfasst, welche in geeigneter Weise in die entsprechenden versteckten Zustände in der versteckten Schicht V einfließen. In der Ausführungsform der Fig. 2 existieren für die Vergangenheit zwei Arten von versteckten Zuständen, nämlich $s_{t-2}^i$, $s_{t-1}^i$ bzw. $s_{t-2}$, $s_{t-1}$. Darüber hinaus enthält das Netz zum aktuellen Zeitpunkt t die versteckten Zustände $s_t^*$ und $s_t^{**}$. An einen Zustand und eine in diesem Zustand ausgeführte Aktion ist ferner die bereits oben erwähnte Belohnung gekoppelt, welche für den Zeitpunkt t in Fig. 1 mit $r_t$ bezeichnet ist. In Fig. 2 ist dabei für die Ausgangsschicht eine zum aktuellen Zeitpunkt t zu prognostizierende Belohnung wiedergegeben. In der Regel enthält die Ausgangsschicht noch weitere, in der Zukunft liegende Belohnungen $r_{t+1}$, $r_{t+2}$ usw., welche durch das Netz prognostiziert werden.

Der gestrichelte Teil des Netzes der Fig. 2 verdeutlicht die Prognose der Belohnung $r_t$ zum Zeitpunkt t, welche an eine interne Belohnung $r_t^i$ gekoppelt ist. Im Unterschied zu bekannten Netzen wird nunmehr die Ausgangsschicht O durch Belohnungssignale und nicht durch Zustandsvektoren beschrieben. Dies macht es erforderlich, dass das Netz der Fig. 2 in zwei Teilnetze aufzuteilen ist, wobei das erste Teilnetz links von der Linie L der Fig. 2 liegt und die Vergangenheit und Gegenwart beschreibt, wohingegen das zweite Teilnetz rechts von der Linie L liegt und Informationen aus dem ersten Teilnetz für die Vorhersage von Belohnungen verwendet. Hierbei ist zu berücksichtigen, dass das Ziel des Netzwerks der Fig. 2 nicht die Vorhersage einer Sequenz von Aktionen ist, d.h. die dargestellte Aktion $a_t$ und auch weitere (nicht gezeigte) zukünftige Aktionen sind vorgegeben. Lediglich die Belohnungen basierend auf den vorgegebenen Aktionen werden prognostiziert. Die einzelnen Zustände in den Schichten sind in geeigneter Weise über mit Großbuchstaben bezeichneten Gewichtsmatrizen miteinander verbunden, wobei sich die Dynamik des Netzes der Fig.

2 durch folgende Gleichungen beschreiben lässt:

$$\mathbf{s}_{t-1} = f\left(A_2^p \cdot \mathbf{s}_{t-1}^i + B^p \cdot \mathbf{z}_{t-1} - \theta_s^p\right) \qquad (4)$$

$$\mathbf{s}_t^i = f\left(A_1^p \cdot \mathbf{s}_{t-1}^i + C^p \cdot \mathbf{a}_{t-1} - \theta^{ip}\right) \qquad (5)$$

$$\mathbf{s}_t^* = f\left(A_2^p \cdot \mathbf{s}_t^i + B^p \cdot \mathbf{z}_t - \theta_s\right) \qquad (6)$$

$$\mathbf{s}^{**} = f\left(D \cdot \mathbf{s}_t^* - \theta^{**}\right) \qquad (7)$$

$$\mathbf{s}_t = f\left(E \cdot \mathbf{s}_t^{**} - \theta_E\right) \qquad (8)$$

$$\mathbf{s}_{t+1}^i = f\left(A_1^f \cdot \mathbf{s}_{t-1} + C^f \cdot \mathbf{a}_{t-1} - \theta^{if}\right) \qquad (9)$$

$$\mathbf{s}_{t+1} = f\left(A_2^f \cdot \mathbf{s}_{t-1}^i - \theta_s^f\right) \qquad (10)$$

$$r_t^i = f\left(F \cdot \mathbf{s}_t + G \cdot \mathbf{a}_t + H \cdot \mathbf{s}_{t+1} - \theta_r^i\right) \qquad (11)$$

$$r_t = f\left(J \cdot r_t^i - \theta_r\right) \qquad (12)$$

wobei dick gedruckte Symbole reellwertige Vektoren darstellen, alle Großbuchstaben reellwertige Matrizen darstellen, alle $\theta$ reellwertige, skalare Schwellwerte darstellen und $f(\cdot)$: $IR^{\overline{J}} \to IR^{\overline{J}}$ eine beliebige, meistens sigmoidale, Aktivierungsfunktion ist.

Anstatt der Verwendung von Gewichtsmatrizen können gegebenenfalls auch Multi-Layer-Perzeptronen zur Beschreibung der Gewichtungen verwendet werden.

Ein wichtiger Aspekt in dem Netz der Fig. 2 besteht darin, dass für die Vergangenheit andere Gewichtsmatrizen (nämlich $A_1^p$, $A_2^p$) als für die Zukunft (nämlich $A_1^f$, $A_2^f$) verwendet werden. Dies wird durch die oben beschriebene Aufteilung in ein erstes und ein zweites Teilnetz erreicht. Allgemein kann diese Aufteilung in Teilnetze derart beschrieben werden, dass ein Teilnetz für vergangene Zustände und ein Teilnetz für zukünftige Zustände derart gebildet ist, dass für den vorherzusagenden versteckten Zustand folgende Bedingung gilt:

$$s_{t+1} = \begin{cases} f_{past}\left(s_t^i, z_t, a_t\right), & t < 0 \\ f_{present}\left(s^*, a_t\right), & t = 0 \\ f_{future}\left(s_t, a_t\right), & t > 0 \end{cases} \qquad (13)$$

Durch die entsprechenden Funktionen $f_{past}$, $f_{present}$ und $f_{future}$ werden allgemein die entsprechenden, in Fig. 2 über Matrizen wiedergegebenen Kopplungen beschrieben. Erfindungsgemäß wird nunmehr anstatt aller beobachteter Zustandsvariablen das Belohnungssignal selbst als Zielgröße verwendet. Das heißt, es wird folgende Zustandsgröße prognostiziert:

$$r_t = g\left(s_t, a_t\right), \; t \geq 0 \qquad (14)$$

Hierbei ist zu beachten, dass der aktuelle versteckte Zustand $s_t$ und die ausgeführte Aktion $a_t$ ausreichend

sind, um den Erwartungswert aller relevanter Belohnungsfunktionen zu beschreiben, da alle Informationen über den Nachfolgezustand $s_{t+1}$ in diesen Argumenten enthalten sein müssen. Mit dem Belohnungssignal als Zielgröße kann die durch das MPEN-Netzwerk durchgeführte Optimierung wie folgt beschrieben werden:

$$\sum_{t=1}^{T}\left(r_t - r_t^d\right)^2 \to \min_{f,g} \qquad (15)$$

Man erkennt, dass im Unterschied zu der Gleichung (3) nunmehr basierend auf bekannten Belohnungssignalen $r_t^d$ aus Trainingsdaten nach einer Parametrisierung für f, g gesucht wird, welche den Fehler zwischen prognostiziertem Belohnungssignal und bekanntem Belohnungssignal minimiert. Ein derartiges rekurrentes neuronales Netz akkumuliert alle Information, welche für die Markov-Eigenschaft erforderlich ist, aus einer Sequenz von vergangenen Beobachtungen in dem ersten Teilnetz, wohingegen das zweite Teilnetz die Zustandsübergänge optimiert.

Das im Vorangegangenen beschriebene MPEN-Netz beruht auf der bewiesenen Erkenntnis, dass ein rekurrentes neuronales Netz zur Approximation eines Markov-Entscheidungsprozesses verwendet werden kann, indem alle erwarteten zukünftigen Folgezustände basierend auf einer Historie von Beobachtungen vorhergesagt werden. Aufgrund der rekurrenten neuronalen Netzstruktur muss jeder Zustand alle erforderliche Information codieren, um einen Folgezustand abzuschätzen, der sich aus der Durchführung einer Aktion ergibt. Aus diesem Grund muss ein rekurrentes neuronales Netz in der Lage sein, die erwarteten Belohnungssignale für jeden zukünftigen Zustand abzuschätzen, da eine Belohnungsfunktion nur einen Zustand, eine Aktion und einen Folgezustand als Argumente verwenden kann. Hieraus folgt, dass es für ein bestärkendes Lernen mit einem rekurrenten neuronalen Netz ausreichend ist, eine Dynamik zu modellieren, welche in der Lage ist, das Belohnungssignal für alle zukünftigen Zeitpunkte vorherzusagen. Basierend auf dieser Aussage wurde das oben beschriebene und beispielhaft in Fig..2 gezeigte MPEN-Netz konstruiert.

Ein entsprechend mit Trainingsdaten gelerntes MPEN-Netz wird im Rahmen der Erfindung als Zustandsschätzer für den versteckten Zustand $s_{t+1}$ verwendet. Dieser Zustand dient dann als Eingabe für ein weiteres Lern- und/oder Optimierungsverfahren. In diesem Aspekt entspricht das erfindungsgemäße Verfahren dem in der Druckschrift DE 10 2007 001 026 B4 beschriebenen Verfahren, wobei erfindungsgemäß jedoch eine andere Modellierung für das dynamische Verhalten des technischen Systems verwendet wird. Als nachgeschaltete Lern- und/oder Optimierungsverfahren werden aus dem Stand der Technik bekannte maschinelle Lernverfahren eingesetzt, beispielsweise kann das bestärkende Lernverfahren aus der Druckschrift DE 10 2007 001 025 B4 verwendet werden. Ebenso können die bekannten Lernverfahren Dynamische Programmierung, Prioritized Sweeping und Q-Learning eingesetzt werden.

Fig. 3 verdeutlicht ein technisches System in der Form einer Windturbine, wobei basierend auf Betriebsdaten der Windturbine eine Ausführungsform des erfindungsgemäßen Verfahrens getestet wurde. Die Windturbine ist in Fig. 1 mit Bezugszeichen 1 bezeichnet und umfasst drei Rotorblätter 1a, 1b und 1c. Das dynamische Verhalten der Windturbine wurde sowohl mit einem herkömmlichen rekurrenten neuronalen Netz als auch mit dem erfindungsgemäßen MPEN-Netz modelliert, wobei als Belohnungssignal die auf die Rotorblätter wirkende Last verwendet wurde, welche zu minimieren ist. Eine an der Windturbine auszuführende Aktion ist dabei durch die Veränderung des Anstellwinkels der einzelnen Rotorblätter spezifiziert, wobei diese Veränderung durch entsprechende Kreise C in Fig. 3 angedeutet ist.

In den durchgeführten Experimenten wurden als Eingangsvariablen, d.h. als Zustände der Eingangsschicht, insgesamt 46 Variablen betrachtet. In dem herkömmlichen rekurrenten neuronalen Netz wurde auch die Ausgangsschicht mit diesen 46 Variablen beschrieben. Demgegenüber wurde in dem erfindungsgemäßen MPEN-Netz nur das Belohnungssignal als zu prognostizierende Ausgabe betrachtet. Es wurden dabei verschiedene rekurrente neuronale Netze mit unterschiedlich vielen vergangenen Zuständen sowie zukünftigen zu prognostizierenden Zuständen bzw. Belohnungen betrachtet. Ebenso wurde die Dimension der entsprechenden versteckten Zustände (d.h. die Anzahl der Zustandsvariablen eines versteckten Zustands) unterschiedlich gewählt.

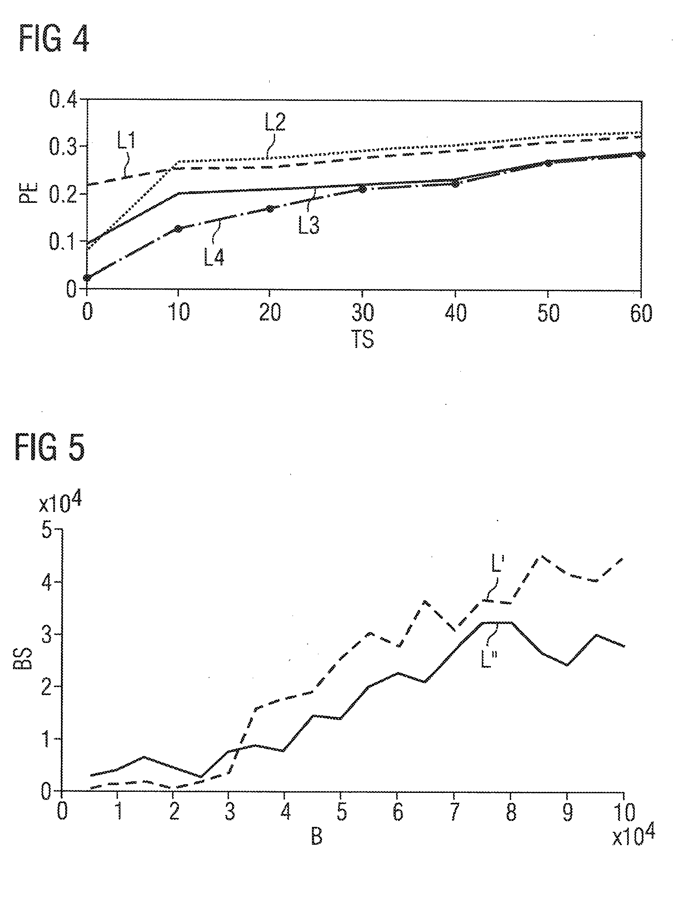

Fig. 4 zeigt ein Diagramm, welches den durchschnittlichen Prognosefehler PE für die Last auf die Rotorblätter in Abhängigkeit von dem prognostizierten Zeitschritt TS in der Zukunft wiedergibt. Die Linien L1 und L2 zeigen dabei den Fehler für herkömmliche neuronale Netze, bei denen jeweils versteckte Zustände mit 20 Zustandsvariablen betrachtet wurden. Für das Netz gemäß der Linie L2 wurden ferner anstatt von 46 Variablen in der Eingangsschicht nur 26 Variablen verwendet. Demgegenüber zeigt die Linie L3 ein MPEN-Netz mit versteckten Zuständen aus vier Zustandsvariablen und die Linie L4 ein MPEN-Netz mit versteckten Zuständen aus 20 Zustandsvariablen. Man erkennt, dass die MPEN-Netze bessere Prognosen als die herkömmlichen rekurrenten neuronalen Netze liefern, obwohl sie einen versteckten Zustandsraum mit nur vier Variablen vewenden. Das erfindungsgemäße MPEN-Netz, bei dem Belohnungssignale prognostiziert werden, beschreibt somit sehr gut die Dynamik eines technischen Systems in der Form einer Windturbine. Dabei ist das Verfahren sehr recheneffizient, da bereits eine geringe Anzahl von versteckten Zustandsvariablen zur Modellierung des Systems ausreichend ist. Es kann somit davon ausgegangen werden, dass eine nachfolgende Steuerung bzw. Regelung einer Windturbine basierend auf mit dem MPEN-Netz prognostizierten versteckten Zuständen einen optimierten Betrieb der Windturbine mit möglichst geringer Last auf die Rotorblätter ermöglicht.

Das erfindungsgemäße Verfahren wurde ferner anhand des hinlänglich aus dem Stand der Technik bekannten Cart-Pole-Problems getestet. Dieses Problem ist z.B. in der Druckschrift DE 10 2007 001 025 B4 näher erläutert. Das klassische Cart-Pole-Problem betrifft einen Stab, der auf einem sich in der Ebene bewegenden Fahrzeug schwenkbar befestigt ist, wobei sich das Fahrzeug zwischen zwei Begrenzungen hin und her bewegen kann. Der Stab ist nach oben ausgerichtet und Ziel ist es, den Stab so lange wie möglich durch Verschieben des Fahrzeugs innerhalb der Begrenzungen zu balancieren, ohne dass die Begrenzungen erreicht werden oder sich der Stab mehr als 12° gegenüber der Vertikalen neigt. Das Problem ist dann gelöst, wenn der Stab für mehr als 100000 Schritte, welche jeweils eine vorbestimmte Bewegung des Fahrzeugs darstellen, balanciert wird. Ein entsprechendes Belohnungssignal wird dabei durch den Wert -1 definiert, wenn eine der Grenzen erreicht wird. Ansonsten ist das Belohungssignal 0. Der Markovsche Zustand des Cart-Pole-Problems zu jedem Zeitpunkt t wird vollkommen durch die Position des Fahrzeugs $x_t$, die Geschwindigkeit des Fahrzeugs $\dot{x}_t$, den Winkel des Stabs senkrecht zum Fahrzeug $\alpha_t$ und die Winkelgeschwindigkeit $\dot{\alpha}_t$ des Stabs beschrieben. Mögliche Aktionen umfassen dabei eine Bewegung des Fahrzeugs nach links bzw. nach rechts mit einer konstanten Kraft F oder das Nichtanwenden einer Kraft.

Zum Test des erfindungsgemäßen Verfahrens wurden in der Eingangsschicht des MPEN-Netzes nur drei Observablen, nämlich die Position und Geschwindigkeit des Fahrzeugs und der Winkel des Stabs, betrachtet. Hierdurch wurde die Markov-Bedingung verletzt. Die mit dem MPEN-Netz erhaltenen versteckten Zustände wurden anschließend einem Lernverfahren basierend auf tabellenbasierter dynamischer Programmierung zugeführt. Obwohl die Markov-Bedingung durch die Betrachtung von nur drei Observablen verletzt ist, konnte mit dem MPEN-Netz trotzdem in geeigneter Weise ein Markov-Entscheidungsprozess extrahiert werden und das Cart-Pole-Problem zufriedenstellend gelöst werden.

Dies wird durch Fig. 5 veranschaulicht, welche ein Diagramm zeigt, das das die gelernten Aktionsauswahlregeln wiedergibt. Die Linie L' der Fig. 5 verdeutlicht die mit dem MPEN-Netz und der anschließenden dynamischen Programmierung erhaltene Anzahl von aufeinander folgenden Balancierungsschritten BS in Abhängigkeit von der Anzahl von Beobachtungen B, mit denen die dynamische Programmierung gelernt wurde. Demgegenüber repräsentiert die Linie L" in Fig. 5 die Anzahl an aufeinander folgenden Balancierungsschritten für eine dynamische Programmierung basierend auf den ursprünglichen vier Observablen ohne vorgeschaltetes MPEN-Netz. Das MPEN-Netz wurde mit 25000 Trainingsdaten trainiert, wobei - wie oben erwähnt - nur drei Observablen berücksichtigt wurden. Man erkennt aus Fig. 5, dass trotz des Weglassens einer Observablen für das Cart-Pole-Problem sehr gute Ergebnisse mit einer hohen Anzahl von balancierten Schritten erreicht werden.

Wie sich aus den obigen Erläuterungen ergibt, weist das erfindungsgemäße Verfahren eine Reihe von Vorteilen auf. Insbesondere wird eine hohe Prognosegüte erreicht, welche wesentlich besser ist als bei herkömmlichen rekurrenten neuronalen Netzen. Ferner kann bei der Modellierung der Dynamik des technischen Systems ein kompakter interner Zustandsraum mit wenigen versteckten Zustandsvariablen verwendet werden. Dieser eröffnet die Möglichkeit, für die auf die versteckten Zustände angewendeten Lern- und/oder Optimierungsverfahren auch solche Verfahren zu verwenden, welche als Eingangsdaten einen Zustandsraum mit einer kleinen Dimension benötigen.

In dem erfindungsgemäßen Verfahren werden durch die Nutzung des Bewertungssignals bzw. der das Bewertungssignal ausschließlich beeinflussenden Größen als zu prognostizierende Zielwerte nur die für die Dynamik des Systems relevanten Aspekte berücksichtigt. Hierdurch kann ein Zustand mit minimaler Dimension in der versteckten Schicht eingesetzt werden, der anschließend als Zustand für ein entsprechendes LernVerfahren bzw. eine modellprädikative Regelung oder andere Optimierungsverfahren zur Suche im Raum der Aktionen genutzt werden kann, um somit ein auf dem Bewertungssignal basierendes Optimalsteuerungsproblem zu lösen.

## Patentansprüche

1.  Verfahren zur rechnergestützten Steuerung und/oder Regelung eines technischen Systems (T), bei dem:

    a) das technische System (T) für mehrere Zeitpunkte (t) jeweils durch einen Zustand ($x_t$) mit einer Anzahl von Zustandsvariablen und eine am technischen System durchgeführte Aktion ($a_t$) mit einer Anzahl von Aktionsvariablen sowie ein Bewertungssignal ($r_t$) für den Zustand ($x_t$) und die Aktion ($a_t$) charakterisiert wird;
    b) das dynamische Verhalten des technischen Systems (T) mit einem rekurrenten neuronalen Netz umfassend eine Eingangsschicht (I), eine rekurrente versteckte Schicht (H) und eine Ausgangsschicht (O) basierend auf Trainingsdaten aus bekannten Zuständen ($x_t$), Aktionen ($a_t$) und Bewertungssignalen ($r_t$) modelliert wird, wobei:

    i) die Eingangsschicht (I) durch einen ersten Zustandsraum mit einer ersten Dimension gebildet wird, der die Zustände ($x_t$) des technischen Systems (T) und die am technischen System (T) durchgeführten Aktionen ($a_t$) umfasst;

ii) die rekurrente versteckte Schicht (V) durch einen zweiten Zustandsraum mit einer zweiten Dimension gebildet wird, der versteckte Zustände ($s_t$, $s_t^i$, $s_t^*$, $s_t^{**}$) mit einer Anzahl von versteckten Zustandsvariablen umfasst;

iii) die Ausgangsschicht (O) durch einen dritten Zustandsraum mit einer dritten Dimension gebildet wird, welcher derart festgelegt wird, dass seine Zustände die Bewertungssignale ($r_t$) oder ausschließlich solche Zustands- und/oder Aktionsvariablen repräsentieren, welche die Bewertungssignale ($r_t$) beeinflussen;

c) auf den versteckten Zuständen ($s_t$) in dem zweiten Zustandsraum ein Lern- und/oder Optimierungsverfahren zur Steuerung und/oder Regelung des technischen Systems (T) durch Ausführen von Aktionen ($a_t$) am technischen System (T) durchgeführt wird.

2. Verfahren nach Anspruch 1, bei dem bei der Modellierung des dynamischen Verhaltens des technischen System in Schritt b) das rekurrente neuronale Netz basierend auf den Trainingsdaten derart trainiert wird, dass die Zustände ($r_t$) der Ausgangsschicht (O) für einen,oder mehrere zukünftige Zeitpunkte aus einem oder mehreren vergangenen Zeitpunkten prognostiziert werden.

3. Verfahren nach Anspruch 2, bei dem die versteckten Zustände ($s_t$, $s_t^i$, $s_t^*$, $s_t^{**}$) in der versteckten Schicht (V) über Gewichte ($A_1^p$, $A_1^p$, $A_1^f$, $A_1^f$) derart verbunden sind, dass sich die Gewichte ($A_1^f$, $A_1^f$) für zukünftige Zeitpunkte von den Gewichten ($A_1^p$, $A_1^p$) für vergangene Zeitpunkte unterscheiden.

4. Verfahren nach einem der vorhergehenden Ansprüche, bei dem das technische System eine nicht-lineare Dynamik aufweist.

5. Verfahren nach einem der vorhergehenden Ansprüche, bei dem in Schritt b) das rekurrente neuronale Netz eine nicht-lineare Aktivierungsfunktion verwendet.

6. Verfahren nach einem der vorhergehenden Ansprüche, bei dem das Lern- und/oder Optimierungsverfahren in Schritt c) ein maschinelles Lernverfahren und insbesondere ein bestärkendes Lernverfahren ist.

7. Verfahren nach Anspruch 6, bei dem das Lern- und/oder Optimierungsverfahren Dynamische Programmierung und/oder Prioritized Sweeping und/oder Q-Learning umfasst.

8. Verfahren nach einem der vorhergehenden Ansprüche, bei dem in Schritt b) die zweite Dimension des zweiten Zustandsraums variiert wird, bis eine zweite Dimension gefunden ist, welche ein oder mehrere vorgegebene Kriterien erfüllt.

9. Verfahren nach Anspruch 8, bei dem in Schritt b) die zweite Dimension des zweiten Zustandsraums schrittweise solange vermindert wird, wie die Abweichung zwischen den mit dem rekurrenten neuronalen Netz bestimmten Zuständen ($r_t$) der Ausgangsschicht (O) und den bekannten Zuständen gemäß den Trainingsdaten kleiner als ein vorbestimmter Schwellwert ist.

10. Verfahren nach einem der vorhergehenden Ansprüche, bei dem das Bewertungssignal ($r_t$) durch eine Bewertungsfunktion repräsentiert wird, welche von einem Teil der Zustands- und/oder Aktionsvariablen abhängt.

11. Verfahren nach einem der vorhergehenden Ansprüche, bei dem das Lern- und/oder Optimierungsverfahren in Schritt c) die Bewertungssignale ($r_t$) verwendet, um die Aktionen ($a_t$) im Hinblick auf ein optimales Bewertungssignal ($r_t$) auszuführen.

12. Verfahren nach einem der vorhergehenden Ansprüche, bei dem das technische System (T) eine Turbine, insbesondere eine Gasturbine oder eine Windturbine, ist.

13. Verfahren nach einem der vorhergehenden Ansprüche, bei dem das technische System (T) eine Gasturbine ist, wobei das Bewertungssignal ($r_t$) zumindest durch den Wirkungsgrad und/oder die Schadstoffemission der Gasturbine und/oder die Wechseldrücke und/oder mechanischen Belastungen der Brennkammern der Gasturbine bestimmt ist.

14. Verfahren nach einem der vorhergehenden Ansprüche, bei dem das technische System eine Windturbine ist, wobei das Bewertungssignal ($r_t$) zumindest durch die Kraftbelastung und/oder Wechselbelastung auf ein oder mehrere Rotorblätter der Windturbine bestimmt ist.

15. Computerprogrammprodukt mit einem auf einem maschinenlesbaren Träger gespeicherten Programmcode zur Durchführung des Verfahrens nach einem der vorhergehenden Ansprüche, wenn das Programm auf einem Rechner abläuft.

**Claims**

1. Method for computer-aided control and/or regulation of a technical system (T), wherein:

    a) the technical system (T) is characterised, for a plurality of time points (t), in each case, by a state ($x_t$) with a number of state variables and an action ($a_t$) carried out on the technical system with a number of action variables and an evaluation signal ($r_t$) for the state ($x_t$) and the action ($a_t$);
    b) the dynamic behaviour of the technical system (T) is modelled with a recurrent neural network comprising an input layer (I), a recurrent hidden layer (H) and an output layer (O) based on training data comprising known states ($x_t$), actions ($a_t$) and evaluation signals ($r_t$), wherein:

    i) the input layer (I) is formed by a first state space with a first dimension which comprises the states ($x_t$) of the technical system (T) and the actions ($a_t$) performed on the technical system (T);
    ii) the recurrent hidden layer (V) is formed by a second state space with a second dimension and comprises hidden states ($s_t$, $s_t^i$, $s_t^*$, $s_t^{**}$) with a number of hidden state variables;
    iii) the output layer (O) is formed by a third state space with a third dimension which is defined such that the states thereof represent the evaluation signals ($r_t$) or exclusively those state and/or action variables which influence the evaluation signals ($r_t$);

    c) a learning and/or optimisation process is performed on the hidden states ($s_t$) in the second state space for controlling and/or regulating the technical system (T) by carrying out actions ($a_t$) on the technical system (T).

2. Method according to claim 1, wherein in the modelling of the dynamic behaviour of the technical system, in step b), the recurrent neural network is trained using the training data such that the states ($r_t$) of the output layer (O) are predicted for one or more future time points from one or more past time points.

3. Method according to claim 2, the hidden states ($s_t$, $s_t^i$, $s_t^*$, $s_t^{**}$) being linked in the hidden layer (V) via weights ($A_1^p$, $A_1^p$, $A_1^f$, $A_1^f$) such that the weights ($A_1^f$, $A_1^f$) for future time points differ from the weights ($A_1^p$, $A_1^p$) for past time points.

4. Method according to one of the preceding claims, the technical system comprising a non-linear dynamic behaviour.

5. Method according to one of the preceding claims, wherein in step b), the recurrent neural network uses a non-linear activation function.

6. Method according to one of the preceding claims, the learning and/or optimisation process in step c) being an automated learning process and, in particular a reinforcement learning process.

7. Method according to claim 6, the learning and/or optimisation process comprising programming and/or prioritised sweeping and/or Q-learning.

8. Method according to one of the preceding claims, wherein in step b), the second dimension of the second state space is varied until a second dimension is found which fulfils one or more pre-determined criteria.

9. Method according to claim 8, wherein in step b), the second dimension of the second state space is reduced step-by-step for as long as the deviation between the states ($r_t$) of the output layer (O), determined with the recurrent neural network, and the known states according to the training data, is smaller than a pre-determined threshold value.

10. Method according to one of the preceding claims, the evaluation signal ($r_t$) being represented by an evaluation function which depends on part of the state variables and/or action variables.

11. Method according to one of the preceding claims, the learning and/or optimisation process in step c) using the

evaluation signals ($r_t$) in order to carry out the actions ($a_t$) with respect to an optimum evaluation signal ($r_t$).

12. Method according to one of the preceding claims, the technical system (T) being a turbine, in particular a gas turbine or a wind turbine.

13. Method according to one of the preceding claims, wherein the technical system (T) is a gas turbine, the evaluation signal ($r_t$) being determined at least by the efficiency and/or pollutant emissions of the gas turbine and/or the alternating pressures and/or the mechanical loading on the combustion chambers of the gas turbine.

14. Method according to one of the preceding claims, wherein the technical system is a wind turbine, the evaluation signal ($r_t$) being determined at least by the force loading and/or alternating loading on one or more rotor blades of the wind turbine.

15. Computer program product having a program code stored on a machine-readable carrier for carrying out the method according to one of the preceding claims, when the program runs on a computer.


**Revendications**

1. Procédé de commande et/ou de régulation d'un système technique (T) assistées par ordinateur, selon lequel :

   a) le système technique (T) est caractérisé, pour plusieurs instants (t), respectivement par un état ($x_t$) comportant un nombre de variables d'état et par une action ($a_t$) comportant un nombre de variables d'action et exécutée sur le système technique ainsi que par un signal d'évaluation ($r_t$) pour l'état ($x_t$) et l'action ($a_t$) ;
   b) le comportement dynamique du système technique (T) est modélisé avec un réseau neuronal comprenant une couche d'entrée (I), une couche récurrente cachée (H) et une couche de sortie (O) sur la base de données d'apprentissage tirées d'états ($x_t$), actions ($a_t$) et signaux d'évaluation ($r_t$) connus,

   i) la couche d'entrée (I) étant formée par un premier espace d'état comportant une première dimension et incluant les états ($x_t$) du système technique (T) et les actions ($a_t$) exécutées sur le système technique (T) ;
   ii) la couche récurrente cachée (V) étant formée par un deuxième espace d'état comportant une deuxième dimension et incluant des états cachés ($s_t$, $s_t^i$, $s_t^*$, $s_t^{**}$) comportant un nombre de variables d'état cachées ;
   iii) la couche de sortie (O) étant formée par un troisième espace d'état comportant une troisième dimension et déterminé de telle sorte que ses états représentent les signaux d'évaluation ($r_t$) ou uniquement des variables d'état et/ou d'action qui influencent les signaux d'évaluation ($r_t$) ;

   c) est exécuté, sur les états cachés ($s_t$), dans le deuxième espace d'état, un procédé d'apprentissage et/ou d'optimisation pour la commande et/ou la régulation du système technique (T) par l'exécution d'actions ($a_t$) sur le système technique (T).

2. Procédé selon la revendication 1, selon lequel, lors de la modélisation du comportement dynamique du système technique à l'étape b), le réseau neuronal récurrent subit un apprentissage tel, sur la base des données d'apprentissage, que les états ($r_t$) de la couche de sortie (O) sont prédits pour un ou plusieurs instants futurs à partir d'un ou de plusieurs instants passés.

3. Procédé selon la revendication 2, selon lequel les états cachés ($s_t$, $s_t^i$, $s_t^*$, $s_t^{**}$) sont reliés de manière telle par des poids ($A_1^p$, $A_1^p$, $A_1^f$, $A_1^f$), dans la couche cachée (V), que les poids ($A_1^f$, $A_1^f$) pour des instants futurs sont différents des poids ($A_1^p$, $A_1^p$) pour des instants passés.

4. Procédé selon l'une des revendications précédentes, selon lequel le système technique présente une dynamique non linéaire.

5. Procédé selon l'une des revendications précédentes, selon lequel, à l'étape b), le réseau neuronal récurrent utilise une fonction d'activation non linéaire.

6. Procédé selon l'une des revendications précédentes, selon lequel le procédé d'apprentissage et/ou d'optimisation de l'étape c) est un procédé d'apprentissage automatique, et plus particulièrement un procédé d'apprentissage par renforcement.

7. Procédé selon la revendication 6, selon lequel le procédé d'apprentissage et/ou d'optimisation inclut la programmation dynamique et/ou le Prioritized Sweeping et/ou le Q-learning.

8. Procédé selon l'une des revendications précédentes, selon lequel, à l'étape b), la deuxième dimension du deuxième espace d'état subit des variations jusqu'à ce qu'il se trouve une deuxième dimension qui remplit un ou plusieurs critères prédéfinis.

9. Procédé selon la revendication 8, selon lequel, à l'étape b), la deuxième dimension du deuxième espace d'état est réduite progressivement tant que l'écart entre les états $(r_t)$ de la couche de sortie (O) déterminés au moyen du réseau neuronal récurrent et les états connus selon les données d'apprentissage est inférieur à une valeur seuil prédéfinie.

10. Procédé selon l'une des revendications précédentes, selon lequel le signal d'évaluation $(r_t)$ est représenté par une fonction d'évaluation qui dépend d'une partie des variables d'état et/ou d'action.

11. Procédé selon l'une des revendications précédentes, selon lequel le procédé d'apprentissage et/ou d'optimisation de l'étape c) utilise les signaux d'évaluation $(r_t)$ pour exécuter les actions $(a_t)$ en vue d'un signal d'évaluation optimal $(r_t)$.

12. Procédé selon l'une des revendications précédentes, selon lequel le système technique (T) est une turbine, et plus particulièrement une turbine à gaz ou une turbine à vent.

13. Procédé selon l'une des revendications précédentes, selon lequel le système technique (T) est une turbine à gaz, le signal d'évaluation $(r_t)$ étant déterminé au moins par le rendement et/ou l'émission de substances nocives de la turbine à gaz et/ou les pressions alternatives et/ou les sollicitations mécaniques des chambres de combustion de la turbine à gaz.

14. Procédé selon l'une des revendications précédentes, selon lequel le système technique est une turbine à vent, le signal d'évaluation $(r_t)$ étant déterminé au moins par la sollicitation de force et/ou la sollicitation alternante d'une ou de plusieurs pales de rotor de la turbine à vent.

15. Produit de programme informatique comportant un code de programme stocké sur un support lisible par machine pour exécuter le procédé selon l'une des revendications précédentes lorsque le programme tourne sur un ordinateur.

## FIG 1

## FIG 3

FIG 2

FIG 4

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007001025 B4
- DE 102007001026 B4